# EUROPEAN PATENT SPECIFICATION

(11) **EP 3 521 059 B1**
(45) Date of publication and mention of the grant of the patent: **03.02.2021**
(21) Application number: 18213409.8
(22) Date of filing: 18.12.2018
(51) Int. Cl.: B60C 9/22, B60C 9/26, B60C 9/18, B60C 11/00

(54) **MOTORCYCLE TIRE**
MOTORRADREIFEN
PNEUMATIQUE DE MOTO

(30) Priority: 02.02.2018 JP 2018017538
(43) Date of publication of application: 07.08.2019
(73) Proprietor: SUMITOMO RUBBER INDUSTRIES, LTD., Kobe-shi, Hyogo 651-0072 (JP)
(72) Inventor: YUKIKO, Hinami, Kobe-shi, Hyogo 651-0072 (JP)
(74) Representative: TBK

(56) References cited:
- EP-A1- 3 225 427
- EP-A1- 3 517 319
- EP-A1- 3 521 060
- EP-A2- 2 261 060
- JP-A- 2005 231 529
- JP-B2- 3 053 287

## Description

### Technical field

The present invention relates to a motorcycle tire, more particularly to a tread reinforcing layer capable of improving high-speed stability performance and cornering performance.

### Background art

JP 2017 177842 A discloses a motorcycle tire provided in the tread portion with a band composed a center portion having a spiral cord structure, and shoulder portions on both sides thereof having a mesh-like cord structure. Thus, the center portion can provide an increased binding force and a suppressed torsional rigidity. As a result, relatively, the torsional rigidity of the shoulder portions is enhanced, and the turning or cornering performance is improved. EP 3 225 427 A1 discloses a motorcycle tire having the features of the preamble of claim 1. EP 3 521 060 A1 and EP 3 517 319 A1 constitute prior art falling under Art. 54(3) EPC.

JP 3 053287 B2, JP 2005 231529 A and EP 2 261 060 A2 disclose further motorcycle tires.

### Summary of the invention

### Problems to be solved by the Invention

In recent years, on the other hand, along with the improvement in performance of motorcycles, motorcycle tires are required to be further improved in high-speed stability performance and cornering performance. Therefore, the present invention was made in view of the above circumstances, and a primary object of the present invention is to provide a motorcycle tire improved in the high-speed stability performance and turning or cornering performance.

The above object is achieved by a motorcycle tire having the features of claim 1. Advantageous further developments are set out in the dependent claims.

### Effects of the Invention

In the motorcycle tire according to the present invention, the spiral part is extended in the tire axial direction so that its both edges are positioned outside the ground contact patch of the tire when the tire mounted on the standard rim and inflated to the standard pressure is contacted with a flat surface and loaded with the normal load at the camber angle of zero. That is, the spiral part extends over the ground contact patch during straight running, therefore, the torsional rigidity of the ground contact patch during straight running becomes decreased to generate limited cornering power. As a result, reaction forces and vibrations caused by, for example, gaps of a road surface are reduced, and the sense of ground contacting is improved, therefore, high-speed stability performance during straight running can be improved. Further, the spiral part is extended to a region mainly contacting with the ground when initiating a turn, therefore, the change in the rigidity of a portion contacting with the ground when the running state is changed from straight running to initiation of a turn can be suppressed. Thereby, the transient characteristics are improved, and the cornering performance can be further improved.

Thus, in the motorcycle tire according to the present invention, it is possible to further improve the high-speed stability performance and the cornering performance.

### Brief Description of the Drawings

Fig. 1 is a cross sectional view of a motorcycle tire as an embodiment of the present invention.
Fig. 2 is a schematic perspective view of a rubber-coated cord strip.
Fig. 3 is a schematic developed plan view of the tread reinforcing layer.
Fig. 4(a) is an enlarged partial view showing the spiral part shown in Fig. 3.
Fig. 4(b) is an enlarged partial view showing the mesh part shown in Fig. 3.
Fig. 5 is a schematic cross sectional view of an apparatus for manufacturing the tread reinforcing layer.
Fig. 6(a) and Fig. 6(b) are diagrams for explaining a process of forming the shoulder reinforcing part of this embodiment.
Fig. 7(a) and Fig. 7(b) are diagrams for explaining a process of forming the shoulder reinforcing part of another embodiment.

### Description of the Preferred Embodiments

Embodiments of the present invention will now be described in detail with reference to the accompanying drawings.

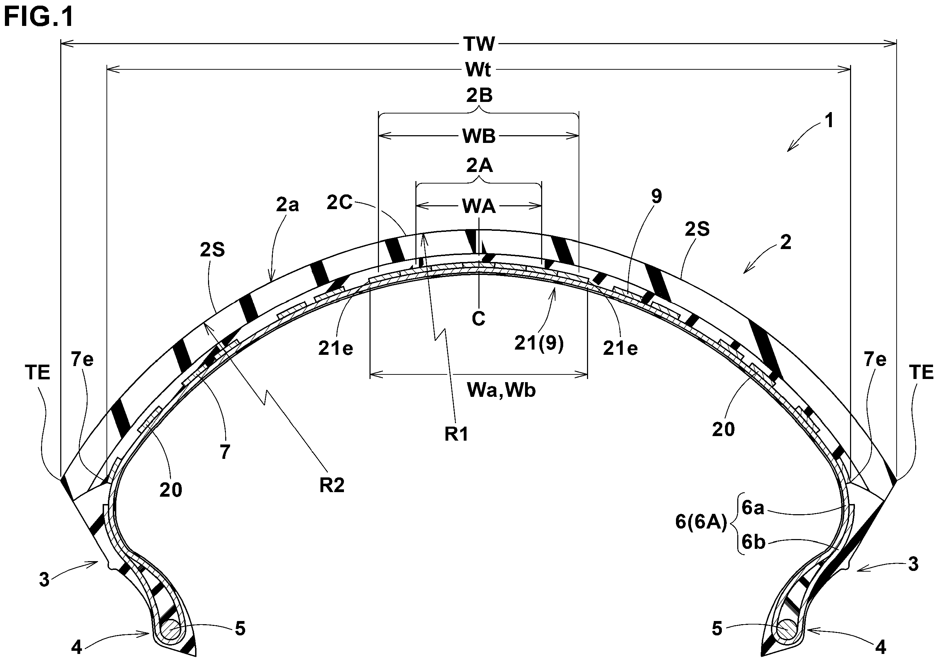

Fig. 1 is a meridian cross sectional view of a motorcycle tire as an embodiment of present invention under its normal state.

The "normal state" is a state in which the tire 1 is mounted on a standard rim (not shown), inflated to a standard pressure, and loaded with no tire load.

In the present specification, unless otherwise noted, dimensions of each part of the tire 1 refer to values measured under the normal state.

The "standard rim" is a rim specified for the tire in the standard system comprising the standard on which the tire 1 is based, for example, "Standard rim" for JATMA, "Design rim " for TRA, "Measuring rim " for ETRTO.

The "standard pressure" is an air pressure specified for the tire in the standard system comprising the standard on which the tire 1 is based, for example, "Maximum air pressure" for JATMA, "Inflation pressure" for ETRTO, Maximum value specified in "TIRE LOAD LIMITS AT VARIOUS COLD INFLATION PRESSURES" table for TRA.

As shown in Fig. 1, the tire 1 in this embodiment comprises a tread portion 2 having a tread surface 2a coming into contact with the ground, a toroidal carcass 6, and a tread reinforcing layer 7 disposed radially outside the carcass 6 in the tread portion 2.

The tread portion 2 is curved in an arc shape being convex toward the radially outside, and has a pair of tread edges TE. The tread edges TE are positioned on the most outsides in the tire axial direction.

The tread portion 2 has a crown region 2C including the tire equator C and a pair of shoulder regions 2S on both sides thereof. The shoulder regions 2S are regions extending from the edges in the tire axial direction of the crown region 2C to the tread edges TE.

The carcass 6 is composed of at least one carcass ply 6A. For example, the carcass ply 6A is made of carcass cords rubberized with an unvulcanized topping rubber, and arranged at an angle of 75 to 90 degrees with respect to the tire equator C. For example, the carcass ply 6A comprises a main portion 6a extending from the tread portion 2 to bead cores 5 on both sides respectively disposed in the bead portions 4 through the sidewall portions 3, and a pair of turnup portions 6b extending continuously from the main portion 6a.

In the meridian cross section of the tire, the tread reinforcing layer 7 extends and curves along the tread portion 2 and is formed over the substantially entire width of the tread portion 2. As a result, the tread reinforcing layer 7 can increase the rigidity of the tread portion 2 over the entire width of the tread portion 2.

From this point of view, it is preferable that the axial width Wt of the tread reinforcing layer 7 is set in a range from 75 % to 95 % of the axial width TW between the tread edges TE of the tread portion 2.

The tread reinforcing layer 7 of this embodiment is formed by winding a rubber-coated cord strip 9 around the carcass 6.

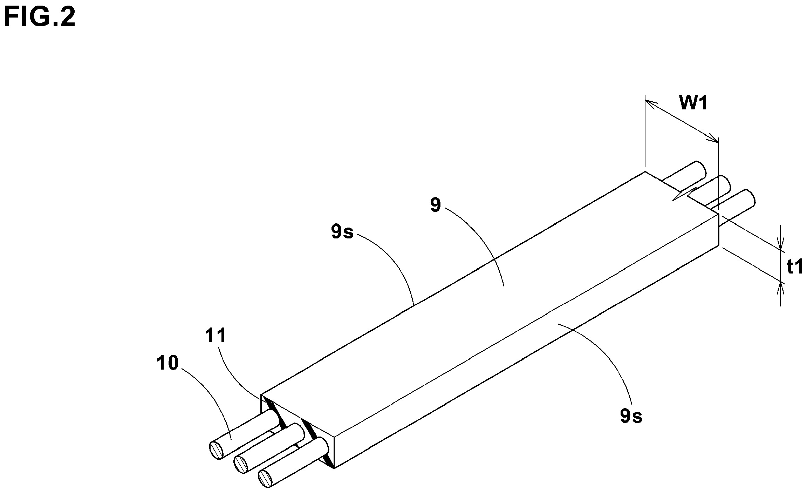

Fig. 2 is a perspective view of the rubber-coated cord strip 9. As shown in Fig. 2, the rubber-coated cord strip 9 has two side edges 9s extending in the longitudinal direction thereof.

The width w1 of the rubber-coated cord strip 9 is preferably set in a range from 2.5 to 12.0 mm, for example.

The thickness t1 of the rubber-coated cord strip 9 is preferably set in a range from 0.6 to 3.0 mm, for example.

For example, the rubber-coated cord strip 9 is formed by covering one or more reinforcing cords 10 with an unvulcanized topping rubber 11.

As the reinforcing cords 10, for example, steel cords and/or organic fiber cords are preferably used.

In this embodiment, the reinforcing cords 10 extend in parallel with the side edge 9s.

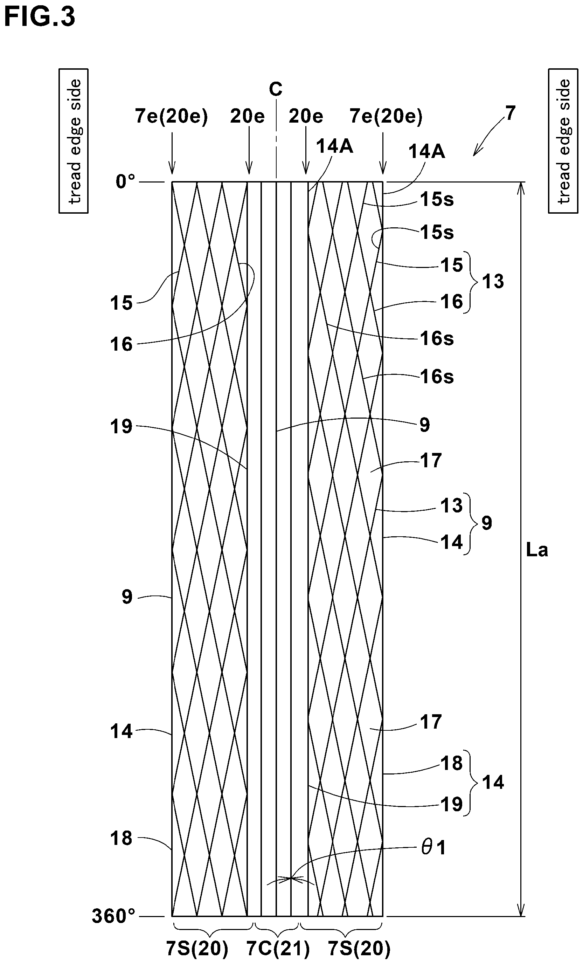

Fig. 3 is a developed plan view of the tread reinforcing layer 7 which is developed in the tire circumferential direction and axial direction. In Fig. 3, the rubber-coated cord strip 9 is indicated by a single solid line (corresponding to the center line in the widthwise direction) for convenience sake. Incidentally, as the tread portion 2 is curved in an arc shape protruding radially outwardly, the circumference of the tire is different between the tire equator C side and the tread edges TE side. In Fig. 3, however, since the tread reinforcing layer 7 is illustrated based on the angle with respect to the tire circumferential direction, the developed plan view of the tread reinforcing layer 7 is shown as a rectangle.

In this embodiment, as shown in Fig. 3, the tread reinforcing layer 7 comprises
a crown reinforcing part 7C formed by winding a rubber-coated cord strip 9 around the crown region 2C, and
a pair of shoulder reinforcing parts 7S each formed by winding a rubber-coated cord strip 9 around one of the shoulder regions 2S.

For example, the crown reinforcing part 7C and the pair of shoulder reinforcing parts 7S are formed from separate rubber-coated cord strips 9. However, the crown reinforcing part 7C and the pair of shoulder reinforcing parts 7S may be formed from one continuous rubber-coated cord strip 9.

Each the shoulder reinforcing parts 7S in this embodiment comprises
a plurality of inclining segments 13 in which the rubber-coated cord strip 9 is inclined, and
a plurality of circumferential segments 14 in which the rubber-coated cord strip 9 extends in the tire circumferential direction.

The plurality of inclining segments 13 of this embodiment includes
a plurality of first inclining segments 15 inclined to one side (diagonally right up in the figure) with respect to the tire circumferential direction, and
a plurality of second inclining segments 16 inclined to the other side (diagonally right down in the figure) opposite to the plurality of first inclining segments 15.

Thereby, the torsional rigidity of the shoulder regions 2S is increased to cause a high cornering power.

In each of the shoulder reinforcing parts 7S in this embodiment, side edges 15s of the first inclining segments 15 are arranged so as not to contact with each other, and side edges 16s of the second inclining segments 16 are arranged so as not to contact with each other. Thereby, the shoulder reinforcing part 7S in this embodiment includes a mesh part 20 in which the first inclining segments 15 intersect the second inclining segments 16 while forming a plurality of spaces 17. Thus, a tension acting on a part of the mesh part 20 can be dispersed over a wide range of the mesh part 20 through the rubber-coated cord strip 9, so the rigidity of the shoulder region 2S is increased and the cornering performance is improved.

The crown reinforcing part 7C in this embodiment includes a spiral part 21 which is composed of more than one turn of a rubber-coated cord strip 9 extending substantially in parallel with the tire circumferential direction.

Such crown reinforcing part 7C exerts a large restraining force on the crown region 2C contacting with the ground during straight running, so the deformation of the tread portion 2 due to the centrifugal force at high speed straight running can be suppressed. Further, such crown reinforcing part 7C can suppress the increase in torsional rigidity of the crown region 2C to produce a relatively low cornering power, therefore, it is possible to reduce reaction forces and vibrations caused by, for example, gaps of a road surface, to improve the sense of ground contacting. Thus, the crown reinforcing part 7C can improve the high-speed stability performance.

In this specification, the expression "the rubber-coated cord strip extends substantially in parallel with the tire circumferential direction" means that the angle θ1 of the rubber-coated cord strip 9 with respect to the tire circumferential direction is in a range from 0 to 8 degrees. Further, in this specification, the values of the angle θ1 refer to those obtained by averaging the angle θ1 over the circumference of the tire in order to exclude a portion inclined at a large angle.

As shown in Fig. 1, both edges 21e in the tire axial direction of the spiral part 21 are, in the tire axial direction, positioned outside the ground contact patch 2A of the tire 1 which occurs when the tire 1 in its normal state is contacted with a flat road surface at the camber angle of 0 degrees and is loaded with a normal load. Thus, the spiral part 21 is disposed over a wider range than the ground contact patch during straight running. Thereby, in the ground contact patch during straight running, the torsional rigidity becomes decreased, and a relatively low cornering power occurs. For this reason, reaction forces and vibrations caused by, for example, gaps of a road surface are reduced, and the improvement in the sense of ground contacting is assured, therefor, the high-speed stability performance during straight running is enhanced. Since the spiral part 21 is further formed in a region mainly contacting with the ground when initiating a turn, if the running state is changed from straight running to initiation of a turn, the change in the rigidity is suppressed, and the transient characteristics are improved to improve the cornering performance.

In view of this, it is preferable that the both edges 21e of the spiral part 21 are positioned outside the ground contact patch 2A when the slip angle of the tire 1 is in a range from 0 to 1 degree.

As described above, in the present invention, attention is paid to a relation between the width wa in the tire axial direction of the spiral part 21 disposed in the crown region 2C, and the width WA in the tire axial direction of the ground contact patch 2A. And, in order to improve the high-speed stability performance and the cornering performance, in the present invention, the width wa in the tire axial direction is set as being larger than the width WA of the ground contact patch 2A.

If the width Wa in the tire axial direction is smaller than the width WA of the ground contact patch 2A, the sense of ground contacting about the ground contact patch during straight running is deteriorated, and the restraining force thereon is reduced, and the high-speed stability performance is deteriorated.

The "normal load" is a load specified for the tire in the standard system comprising the standard on which the tire 1 is based, for example, "Maximum load capacity" for JATMA, "Load capacity" for ETRTO, Maximum value specified in "TIRE LOAD LIMITS AT VARIOUS COLD INFLATION PRESSURES" table for TRA.

The crown reinforcing part 7C in this embodiment is formed by the spiral part 21 only.

Thus, the width wa in the tire axial direction of the spiral part 21 in this embodiment is equal to the width wb in the tire axial direction of the crown region 2C.

The shoulder reinforcing parts 7S in this embodiment are each formed by the mesh part 20 only.

In order to more efficiently improve the transient characteristics during cornering, it is preferred that the both edges 21e of the spiral part 21 are positioned outside a superimposed ground contact patch 2B, wherein
the superimposed ground contact patch 2B is obtained by superimposing
a ground contact patch of the tire 1 when the tire 1 mounted on the standard rim and inflated the standard pressure and loaded with the normal load is inclined to the right at the camber angle of 5 degrees, on
a ground contact patch of the tire 1 when the tire 1 mounted on the standard rim and inflated the standard pressure and loaded with the normal load is inclined to the left at the camber angle of 5 degrees.

The width WB in the tire axial direction of such superimposed ground contact patch 2B is shown in Fig. 1.

According to the present invention, the width wa in the tire axial direction of the spiral part 21 is less than 55 % and more than 30 % of the widthTW in the tire axial direction of the tread portion 2. Thereby, during cornering, the shoulder regions 2S provided with the mesh part 20 contact with the ground and the cornering performance can be maintained at high levels.

In order to improve the high-speed stability performance and the cornering performance in good balance, according to the present invention, the width Wa in the tire axial direction of the spiral part 21 is set in a range from 30 % to 55 % of the width TW in the tire axial direction of the tread portion 2.

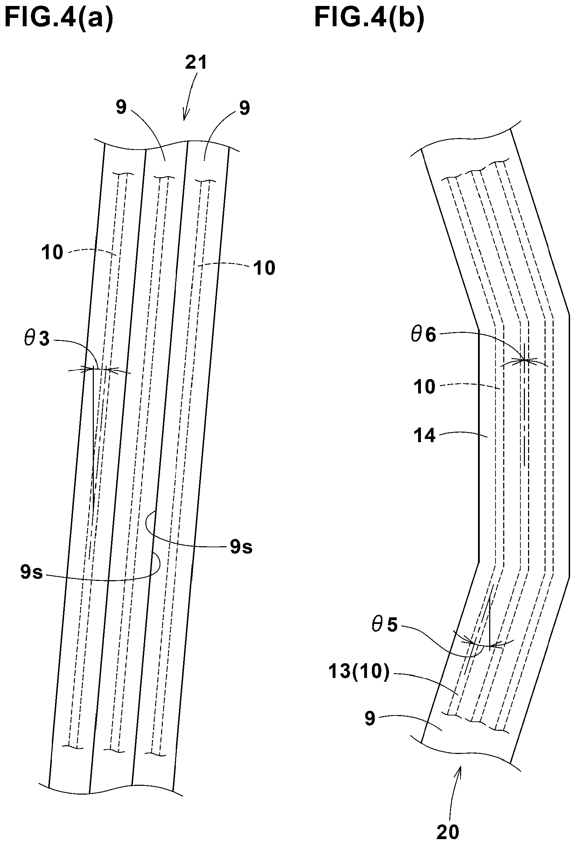

Fig. 4(a) shows a part of the spiral part 21. In the spiral part 21, it is preferable that, as shown in Fig. 4, the angle θ3 of the reinforcing cord 10 with respect to the tire circumferential direction is not more than 5 degrees. Thereby, the restraining force on the crown region 2C is increased, and deformation of the carcass 6 is suppressed, therefore, the high-speed stability performance is further improved.

In the spiral part 21 in this embodiment, the side edges 9s of the rubber-coated cord strip 9 which are adjacent to each other in the tire axial direction are substantially in contact with each other. In the spiral part 21, however, the side edges 9s of the rubber-coated cord strip 9 which are adjacent to each other in the tire axial direction may be separated from each other, or overlapped with each other.

The center of the width in the tire axial direction of the spiral part 21 in this embodiment is positioned at the tire equator C.

It is preferable that the rubber-coated cord strip 9 forming the spiral part 21 has only one reinforcing cord 10 embedded therein. Thereby, the torsional rigidity of the crown region 2C is increased. It is preferable that such rubber-coated cord strip 9 has a width W1 of from 2.5 to 3.5 mm for example, and a thickness t1 of from 0.6 to 3.0 mm for example.

It is preferable that, as shown in Fig. 1, in the meridian cross section of the tire 1 under the normal state including the rotational axis of the tire 1, the tread surface of the tread portion 2 has a profile which has, in the crown region 2C, a radius or radii R1 of less than 60 % of the width TW in the tire axial direction of the tread portion 2. Such crown region 2C improves the transient characteristics when the running state is changed from straight running to initiation of a turn, therefore, the cornering performance can be improved. If the tread radius/radii R1 in the crown region 2C is/are excessively small, there is a possibility that straight running becomes unstable, and the high-speed stability performance is deteriorated.

For this reason, It is preferred that the tread radius/radii R1 in the crown region 2C is/are set to be not less than 30 % of the width TW in the tire axial direction of the tread portion 2. In this embodiment, the profile in the crown region 2C is made up of a plurality of circular arcs having the different radii R1.

It is preferable that, in each of the shoulder regions 2S, the profile of the tread surface has a radius or radii R2 smaller than the radius/radii R1 in the crown region 2C. As a result, the turning radius can be decreased, and thereby the cornering performance is improved. In order to effectively derive this advantage, it is preferred that the radius/radii R2 in the shoulder regions 2S is/are set in a range from 20 % to 50 % of the width TW in the tire axial direction of the tread portion 2.

As shown in Fig. 3, the circumferential segments 14 of the mesh part 20 are disposed at both edges 20e in the tire axial direction of the mesh part 20. The circumferential segments 14 include a plurality of outer circumferential segments 18 on the tread edge TE side, and a plurality of inner circumferential segments 19 on the tire equator C side.

The outer circumferential segments 18 are positioned in a region which contacts with the ground mainly during full-bank cornering, therefore, the torsional rigidity of this region is relatively decreased to cause limited cornering power. For this reason, reaction forces and vibrations caused by, for example, gaps of a road surface are reduced, and the sense of ground contacting and the cornering performance during full-bank cornering can be improved.

The inner circumferential segments 19 increase the rigidity of a region close to the crown region 2C, and decrease the rigidity change between the crown region 2C and the shoulder regions 2S. Thereby, the transient characteristics when the running state is changed from straight running to initiation of a turn can be improved, therefore, the cornering performance is further improved.

Ends in the tire circumferential direction of the circumferential segments 14 are, for example, connected to the first inclining segments 15 and the second inclining segments 16.

It may be possible that both of the ends of each of the circumferential segments 14 are connected to two of the circumferentially adjacent first inclining segments 15, or alternatively two of the circumferentially adjacent second inclining segments 16.

At each edge 20e of the mesh part 20, the circumferential segments 14 are arranged in line in the tire circumferential direction. In this embodiment, the circumferential segments 14 are arranged as if they continue in the tire circumferential direction, making continuous one turn 14A having a circumferential length La at each edge 20e. This helps to further improve the high-speed stability performance and the cornering performance.

Fig. 4(b) shows a part of the mesh part 20. As shown in Fig. 4(b), the angle θ5 of the reinforcing cords 10 in the inclining segments 13 is preferably 3 to 10 degrees, more preferably 4 to 6 degrees with respect to the tire circumferential direction.

By increasing the angle θ5 of the inclining segments 13, it is possible to increase the cornering power of the tire. Especially, when the camber angle is not more than 20 degrees, the effect to increase the cornering power is strongly exhibited.

The angle θ6 of the reinforcing cords 10 in the circumferential segments 14 with respect to the tire circumferential direction is smaller than the angle θ5 of the inclining segments 13, and it is preferable that the angle θ6 is not more than 5 degrees, more preferably not more than 3 degrees, still more preferably not more than 1 degrees.

Next, a method for manufacturing such tread reinforcing layer 7 of the tire 1 will be described.

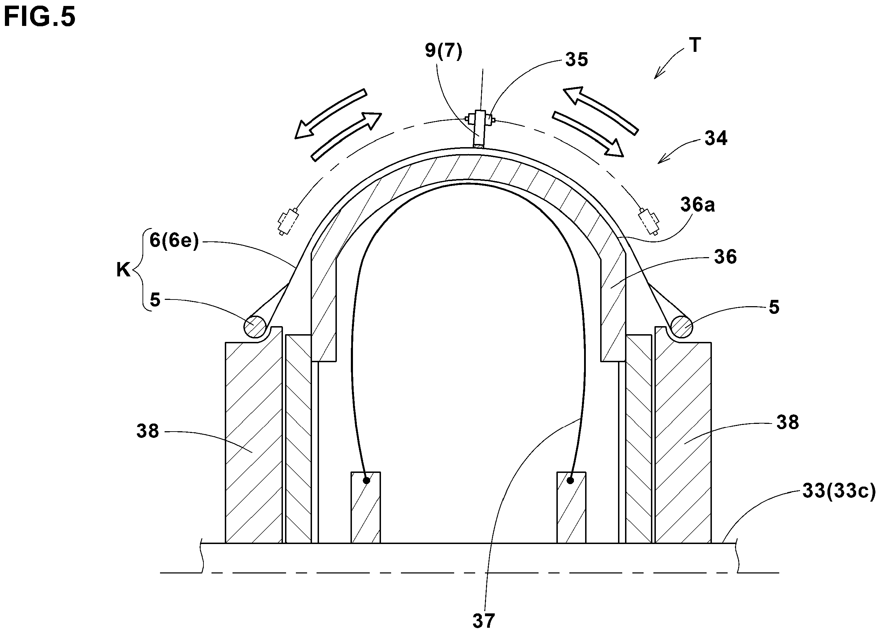

Fig. 5 shows an apparatus T for manufacturing the tread reinforcing layer 7.

The manufacturing apparatus T employed in this embodiment has a well-known structure comprising a base 33, a substantially cylindrical drum 34 rotatably supported by the base 33, and an applicator 35 for supplying the rubber-coated cord strip 9 to the drum 34.

The base 33 comprises a rotating shaft 33c rotatably holding the drum 34. Further, the base 33 comprises a power transmission device for rotating the rotating shaft 33c, a control unit (not shown) for controlling the rotation and the like.

The drum 34 comprises: an annular core 36 provided with an outer peripheral surface 36a having a profile approximate to that of the tread surface 2a of the tire 1; a device 37 for radially expanding/contracting the annular core 36, for example, made from a rubber member; and a tire holding device 38 for holding a raw tire main body K including bead cores 5. In this embodiment, a rubber-coated cord strip 9 is wound on the raw tire main body K.

The applicator 35 is, for example, a conveyor which supplies the rubber-coated cord strip 9, which is placed on the conveying surface, to the drum 34.

For example, on the upstream of the applicator 35, there is disposed a rubber extruder (not shown) for continuously extruding the rubber of the rubber-coated cord strip 9. The applicator 35 is supported by, for example, a three-dimensional moving device (not shown) so that the applicator can be moved in the axial direction and radial direction of the drum 34.

A method for manufacturing the tire in this embodiment comprises a step of preparing a raw tire main body K, and a step of making the tread reinforcing layer 7 by winding the rubber-coated cord strip 9 around the outer peripheral surface of the raw tire main body K. The raw tire main body K includes the carcass 6.

As to the step of preparing a raw tire main body K, its detailed explanation is omitted since a well-known manufacturing method can be employed.

In the winding step of this embodiment, for each of the crown region 2C and the shoulder regions 2S, one separate rubber-coated cord strip 9 is wound.

The winding step includes:
a first shoulder winding step of forming one of the shoulder reinforcing parts 7S,
a crown winding step of forming the crown reinforcing part 7C, and
a second shoulder winding step of forming the other of the shoulder reinforcing parts 7S,
which are, for example, performed in this order.

In the winding step in this embodiment, the rubber-coated cord strips 9 are wound on a surface 6e which is the radially outer surface of the carcass 6 of the raw tire main body K.

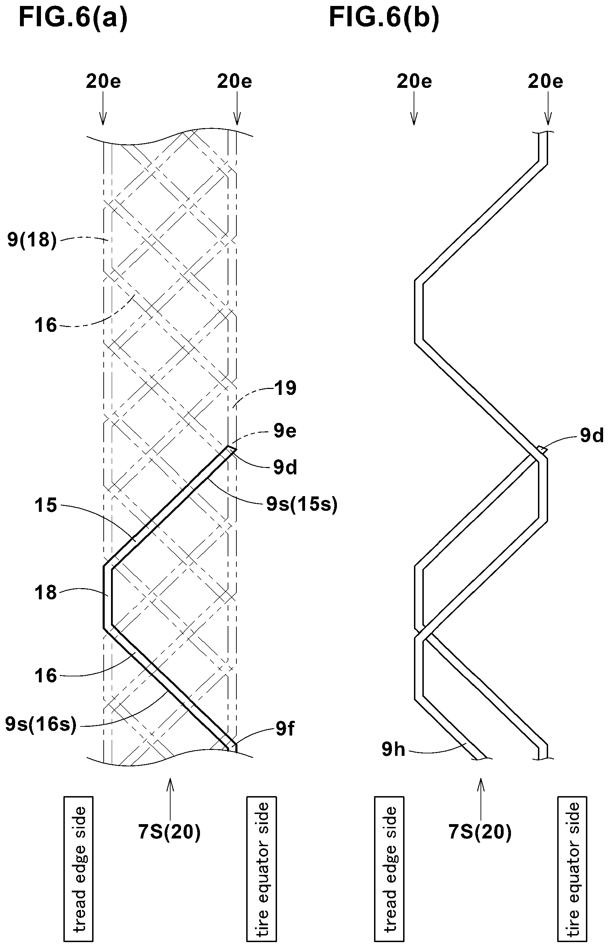

Figs. 6(a) and 6(b) conceptually illustrate the first shoulder winding step of this embodiment.

Fig. 6(a) is a plan view showing a state of the shoulder reinforcing part 7S immediately after the winding of the rubber-coated cord strip 9 is started, wherein
turns of the rubber-coated cord strip 9 not yet wound are indicated by imaginary lines, and a turn of the rubber-coated cord strip 9 partially wound is indicated by solid lines and reference numeral 9f.

Fig. 6 (b) is a plan view showing a state of the shoulder reinforcing part 7S when the winding of the rubber-coated cord strip 9 has been progressed more than Fig. 6(a), wherein
a turn of the rubber-coated cord strip 9 completely wound is indicated by solid lines and reference numeral 9h, and
a turn partially wound is indicated by solid lines and reference numeral 9d.

In the first shoulder winding step, as shown in Fig. 6(a), first, a winding start end 9d of the rubber-coated cord strip 9 when starting the winding is fixed, for example, to one edge 20e of the mesh part 20.

Incidentally, the winding start end 9d may be fixed to the outer edge 20e of the mesh part 20 or a position on one of the inclining portions 13.

In the rubber-coated cord strip 9 wound in the first shoulder winding step, a plurality of reinforcing cords 10, for example, three reinforcing cords 10 are embedded in the topping rubber.

Then, in the first shoulder winding step, the applicator 35 applies the rubber-coated cord strip 9 to the surface 6e of the rotating annular core 36 while reciprocating between the edges 20e.

In this step, as shown in Fig. 6, the rubber-coated cord strip 9 is wound in a zigzag shape comprising the first inclining segments 15 and the second inclining segments 16 so that the side edges 9s (shown in Fig. 2) of the rubber-coated cord strip 9 are not in contact with each other.

In the first shoulder winding step of this embodiment, a first inclining segment 15, an outer circumferential segment 18, a second inclining segment 16, and an inner circumferential segment 18 are wound in this order, and these are repeated to make one turn until a plurality of turns are formed. In this embodiment, therefore, one end and the other end of each inner circumferential segment 18 are respectively connected to one of the first inclining segments 15 and one of the second inclining segments 16, and
one end and the other end of each outer circumferential segment 19 are respectively connected to one of the second inclining segments 16 and one of the first inclining segments 15. Through this step, the rubber-coated cord strip 9 can be formed into the mesh part 20 having spaces 17 surrounded by the first inclining segments 15 and the second inclining segments 16.

In the first shoulder winding step, it is preferable that the winding stop end 9e of the rubber-coated cord strip 9 when ending the winding is fixed so as to continue to the winding start end 9d in the tire circumferential direction.

Next, the crown winding step is performed for example. In this embodiment, the crown winding step is performed, using one rubber-coated cord strip 9 different from that in the first shoulder winding step.

In the rubber-coated cord strip 9 wound in the crown winding step, a single reinforcing cord 10 is embedded along the longitudinal direction.

In the crown winding step of this embodiment, the rubber-coated cord strip 9 is wound spirally more than one turn from one edge 21e to the other edge 21e in the tire axial direction of the spiral part 21 by the use of the applicator 35. In the crown winding step, it is also possible to spirally wind the rubber-coated cord strip 9 from the other edge to the one edge in the tire axial direction of the crown reinforcing part 7C.

In the crown winding step, it is preferable that the winding start end and the winding stop end of the rubber-coated cord strip 9 are positioned at substantially same circumferential points at different axial positions.

Next, the second shoulder winding step is performed. In this embodiment, the second shoulder winding step is performed by using one rubber-coated cord strip 9 different from that in the crown winding step.

Since the second shoulder winding step is performed in the same manner as the first shoulder winding step, its detailed explanation is omitted.

In this way, the tread reinforcing layer 7 is formed.

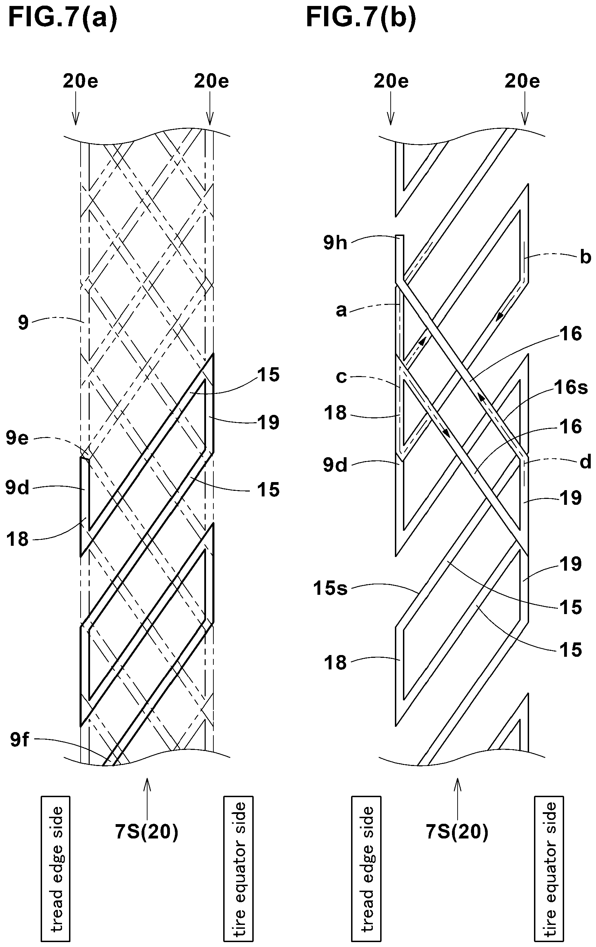

Figs. 7(a) and 7(b) schematically show a first shoulder winding step or a second shoulder winding step of another embodiment.

Fig. 7(a) is a plan view showing a state of the shoulder reinforcing part 7S immediately after the winding of the rubber-coated cord strip 9 is started, wherein
turns of the rubber-coated cord strip 9 not yet wound are indicated by imaginary lines, and
a turn of the rubber-coated cord strip 9 partially wound is indicated by solid lines and reference numeral 9f.

Fig. 7(b) is a plan view showing a state of the shoulder reinforcing part 7S when the winding of the rubber-coated cord strip 9 has been progressed more than Fig. 7(a), wherein a turn of the rubber-coated cord strip 9 partially wound is indicated by reference numeral 9h, and
the rubber-coated cord strip 9 is wound in the order indicated by allowed imaginary lines a, b, c and d.

The same reference numerals are given to the same parts as those in the embodiment of Fig. 6, and the description thereof is omitted. Also in this embodiment, since the second shoulder winding step is the same as the first shoulder winding step, a detailed description thereof will be omitted.

In the first shoulder winding step of this embodiment, the winding start end 9d at the beginning of winding of the rubber-coated cord strip 9 is fixed to one edge 20e of the mesh part 20. Incidentally, the winding start end 9d may be fixed to the other edge 20e of the mesh part 20 or a position on one of the inclining portions 13.

Next, the applicator 35 supplies the rubber-coated cord strip 9 to the outer peripheral surface 36a of the rotating annular core 36 while reciprocating between the edges 20e. In this step, as shown in Fig. 7(a), firstly, the rubber-coated cord strip 9 is wound in the order of a first inclining segment 15, an inner circumferential segment 19, a first inclining segment 15, an outer circumferential segment 18, a first inclining segment 15 ---. Next, as shown in Fig. 7(b), the rubber-coated cord strip 9 is wound in the order of a second inclining segment 16, an inner circumferential segment 19, a second inclining segment 16, an outer circumferential segment 18, a second inclining segment 16 ---.

That is, in this embodiment, the mesh part 20 is formed such that both ends of each of the outer circumferential segments 18 and inner circumferential segments 19 are connected to two of the first inclining segments 15 adjacent to each other in the tire circumferential direction, or alternatively two of the second inclining segments 16 adjacent to each other in the tire circumferential direction.

And the side edges 15s of the first inclining segments 15 are arranged so as not to contact with each other, and the side edges 16s of the second inclining segments 16 are arranged so as not to contact with each other.

As a result, the shoulder reinforcing part 7S is formed as the mesh part 20 having a plurality of spaces 17 surrounded by the first inclining segments 15 and the second inclining segments 16.

### Working Examples

Motorcycle tires having the basic structure shown in Fig. 1 and tread reinforcing layers formed based on that shown in Fig. 3 were experimentally manufactured. The specifications are shown in Table 1.

Common specifications are as follows.
Rubber-coated cord strip for the shoulder reinforcing parts: 4.0 mm in width, 1.0 mm in thickness, three reinforcing cords embedded
Rubber-coated cord strip for the crown reinforcing part: 2.5 mm in width, 1.0 mm in thickness, one reinforcing cord embedded

width wt of the tread reinforcing layer: 90 % of TW

These tires were tested for the high-speed stability performance, cornering performance. Test methods are as follows.

### < High-speed stability performance >

The test tires were mounted on all wheels of a 1300cc motorcycle under the following conditions.
Front wheel: tire size 120/70ZR17, rim size 17M/CxMT3.50, tire pressure 250 kPa
Rear wheel: tire size 190/55ZR17, rim size 17M/CxMT5.50, tire pressure 250 kPa

The motorcycle was run on a dry asphalt road in a test course, and the test tire was evaluated by the test rider based on high-speed running characteristics relating to handling stability, grip and the like.

The results are indicated in Table 1 by an index based on Comparative Example 1 being 100, wherein the larger value is better.

### < Cornering performance (Cornering power) >

Using an indoor tire testing machine, the cornering force of each test tire was measured under the following conditions in order to obtain
a value CF(-1 degree) at the slip angle of -1 degree and a value CF(+1 degree) at the slip angle of +1 degree.
Tire size: 190/55 ZR 17
Tire pressure: 250 kPa
Tire load: 1.3 kN

Then, the cornering power was obtained as {CF(+1 degree) - CF(-1 degrees)}/2. Namely, the cornering power obtained herein is the cornering force per 1 degree of the slip angle. The results are indicated in Table 1 by an index based on Comparative Example 1 being 100, wherein the larger the value, the higher the cornering power.

**Table 1**

| Tire | Comparative 1 | Comparative 2 | example 1 | example 2 | example 3 |
|---|---|---|---|---|---|
| WA/Wt (%) | 30 | 30 | 30 | 30 | 30 |
| WB/Wt (%) | 40 | 40 | 40 | 40 | 40 |
| Wa/Wt (%) | 20 | 30 | 52 | 45 | 58 |
| cord angle θ3 in spiral part (deg.) | 5 | 5 | 5 | 5 | 5 |
| R1/TW (%) | 56 | 56 | 56 | 56 | 56 |
| high-speed stability performance | 100 | 105 | 120 | 115 | 120 |
| cornering performance | 100 | 100 | 110 | 110 | 110 |
| | | | | | |

| Tire | example 4 | example 5 | example 6 | example 7 | |
|---|---|---|---|---|---|
| WA/Wt (%) | 30 | 30 | 30 | 30 | |
| WB/Wt (%) | 40 | 40 | 40 | 40 | |
| Wa/Wt (%) | 60 | 52 | 52 | 52 | |
| cord angle θ3 in spiral part (deg.) | 5 | 10 | 5 | 5 | |
| R1/TW (%) | 56 | 56 | 60 | 65 | |
| high-speed stability performance | 120 | 115 | 115 | 110 | |
| cornering performance | 105 | 110 | 110 | 110 | |

As a result of the tests, it was confirmed that the tire of each example is superior in balance to the tire of the comparative example.

### Description of the reference numerals

- 1: motorcycle tire
- 2: tread portion
- 2A: ground contact patch
- 7C: crown reinforcing part
- 9: rubber-coated cord strip
- 21: spiral part
- 20e: edge

## Claims

1. A motorcycle tire (1) comprising:
a toroidal carcass (6), and
a tread reinforcing layer (7) disposed radially outside the carcass (6) in a tread portion (2),
the tread reinforcing layer (7) comprising
a crown reinforcing part (7C) formed by winding a rubber-coated cord strip (9) of at least one rubberized reinforcing cord (10) covered with topping rubber (11), around a crown region (2C) including the tire equator (C), and
a pair of shoulder reinforcing parts (7S) each formed by winding a rubber-coated cord strip (9) around a shoulder region (2S) on each side of the crown region (2C),
wherein
the crown reinforcing part (7C) includes a spiral part (21) in which the rubber-coated cord strip (9) is wound spirally and circumferentially of the tire more than one turns,
the width (Wa) in the tire axial direction of the spiral part (21) is set in a range of 30% to 55% of the width (TW) in the tire axial direction of the tread portion (2),
each of the shoulder reinforcing parts (7S) comprises
a plurality of first inclining segments (15) in which the rubber-coated cord strip (9) is inclined to one side with respect to the tire circumferential direction, and
a plurality of second inclining segments (16) in which the rubber-coated cord strip (9) is inclined to the other side opposite to the plurality of first inclining segments (15), with respect to the tire circumferential direction, so that the first inclining segments (15) intersect the second inclining segments (16),
side edges (15s) of the first inclining segments (15) are arranged so as not to contact with each other, and side edges (16s) of the second inclining segments (16) are arranged so as not to contact with each other, whereby a mesh part (20) having a mesh structure with a plurality of spaces (17) is formed,
both edges (21e) in the tire axial direction of the spiral part (21) are positioned, in the tire axial direction, outside a ground contact patch (2A) of the tire (1) when the tire (1) mounted on a standard rim and inflated to a standard pressure is contacted with a flat surface and loaded with a normal load at the camber angle of zero, and
the shoulder reinforcing parts (7S) further comprise a plurality of circumferential segments (14), in which the rubber-coated cord strip (9) extends in the tire circumferential direction,
**characterized in that**
the circumferential segments (14) are disposed at both edges (20e) in the tire axial direction of the mesh part (20), and
the circumferential segments (14) include a plurality of outer circumferential segments (18) on the tread edge (TE) side and a plurality of inner circumferential segments (19) on the tire equator (C) side.

2. The motorcycle tire (1) according to claim 1, wherein
both edges (21e) in the tire axial direction of the spiral part (21) are positioned, in the tire axial direction, outside a superimposed ground contact patch (2B) which is obtained by superimposing
a ground contact patch of the tire (1) when the tire (1) mounted on the standard rim and inflated the standard pressure and loaded with the normal load is inclined to one direction along the tire axial direction at the camber angle of 5 degrees, on
a ground contact patch of the tire (1) when the tire (1) mounted on the standard rim and inflated the standard pressure and loaded with the normal load is inclined to another direction along the tire axial direction at the camber angle of 5 degrees.

3. The motorcycle tire (1) according to claim 1 or 2, wherein the angle (θ1) with respect to the tire circumferential direction of each reinforcing cord in the spiral part (21) is not more than 5 degrees.

4. The motorcycle tire (1) according to claim 1, 2 or 3, wherein, in the meridian cross section of the tire when the tire is mounted on the standard rim and inflated the standard pressure and loaded with no tire load,
the profile of the tread surface (2a) of the tread portion (2) has, in the crown region (2C), a radius or radii (R1) of less than 60 % of the width (TW) in the tire axial direction of the tread portion (2).

5. The motorcycle tire (1) according to claim 1, 2, 3 or 4, wherein the rubber-coated cord strip (9) forming the spiral part (21) has only one reinforcing cord (10) embedded therein.

## Patentansprüche

1. Motoradreifen (1) mit:
einer toroidalen Karkasse (6), und
einer Laufflächenverstärkungsschicht (7), die radial außerhalb der Karkasse (6) in einem Laufflächenabschnitt (2) angeordnet ist,
wobei die Laufflächenverstärkungsschicht (7)
ein Kronenverstärkungsteil (7C), das durch Wickeln eines gummibeschichteten Cordstreifens (9) aus mindestens einem gummierten Verstärkungscord (10), der mit Abdeckgummi (11) überzogen ist, um einen Kronenbereich (2C), der den Reifenäquator (C) enthält, gebildet ist, und
ein Paar Schulterverstärkungsteile (7S) aufweist, die jeweils durch Wickeln eines gummibeschichteten Cordstreifens (9) um einen Schulterbereich (7S) auf jeder Seite des Kronenbereichs (2C) gebildet sind,
wobei
das Kronenverstärkungsteil (7C) ein spiralförmiges Teil (21) hat, in welchem der gummibeschichtete Cordstreifen (9) spiralförmig und umlaufend mehr als einen Umlauf um den Reifen gewickelt ist,
die Breite (Wa) des spiralförmigen Teils (21) in der axialen Richtung des Reifens in einem Bereich zwischen 30 % bis 55 % der Breite (TW) des Laufflächenabschnitts (2) in der axialen Richtung des Reifens gesetzt ist,
jedes der Schulterverstärkungsteile (7S)
eine Vielzahl von ersten geneigten Segmenten (15), in welchen der gummibeschichtete Cordstreifen (9) mit Bezug auf die Reifenumfangsrichtung zu einer Seite hin geneigt ist, und
eine Vielzahl von zweiten geneigten Segmenten (16) aufweist, in welchen der gummibeschichtete Cordstreifen (9) mit Bezug auf die Reifenumfangsrichtung entgegengesetzt zu der Vielzahl von ersten geneigten Segmenten (15) zu der anderen Seite hin geneigt ist, sodass die ersten geneigten Segmente (15) die zweiten geneigten Segmente (16) schneiden,
Seitenränder (15s) der ersten geneigten Segmente (15) angeordnet sind, sodass sie einander nicht berühren, und Seitenränder (16s) der zweiten geneigten Segmente (16) angeordnet sind, sodass sie einander nicht berühren, wodurch ein Maschenteil (20) gebildet ist, das eine Maschenstruktur mit einer Vielzahl von Räumen (17) hat,
beide - in der axialen Richtung des Reifens - Ränder (21e) des spiralförmigen Teils (21) in der axialen Richtung des Reifens außerhalb einer Bodenkontaktfläche (2a) des Reifens (1) positioniert sind, wenn der Reifen (1), der auf einer Standardfelge montiert und auf einen Standarddruck aufgepumpt ist, bei einem Radsturzwinkel von Null mit einer ebenen Fläche in Kontakt steht und mit einer normalen Last belastet ist, und
die Schulterverstärkungsteile (7s) ferner eine Vielzahl von Umfangssegmenten (14) aufweisen, in welchen sich der gummibeschichtete Cordstreifen (9) in der Reifenumfangsrichtung erstreckt,
**dadurch gekennzeichnet, dass**
die Umfangssegmente (14) in der axialen Richtung des Reifens an beiden Rändern (20e) des Maschenteils (20) angeordnet sind, und
die Umfangssegmente (14) eine Vielzahl von äußeren Umfangssegmenten (18) auf der Seite des Rands (TE) der Lauffläche und eine Vielzahl von inneren Umfangssegmenten (19) auf der Seite des Reifenäquators (C) haben.

2. Motoradreifen (1) nach Anspruch 1, wobei
beide - in der axialen Richtung des Reifens - Ränder (21e) des spiralförmigen Teils (21) in der axialen Richtung des Reifens außerhalb einer überlagerten Bodenkontaktfläche (2B) positioniert sind, welche durch Überlagerung von Folgendem erhalten wird:
einer Bodenkontaktfläche des Reifens (1), wenn der Reifen (1), der auf der Standardfelge montiert und auf den Standarddruck aufgepumpt und mit der Normallast belastet ist, zu einer Richtung entlang der axialen Richtung des Reifens bei dem Radsturzwinkel von 5 Grad geneigt ist, mit
einer Bodenkontaktfläche des Reifens (1), wenn der Reifen (1), der auf der Standardfelge montiert und auf den Standarddruck aufgepumpt und mit der Normallast belastet ist, zu einer anderen Richtung entlang der axialen Richtung des Reifens bei dem Radsturzwinkel von 5 Grad geneigt ist.

3. Motoradreifen (1) nach Anspruch 1 oder 2, wobei der Winkel (θ1) von jedem Verstärkungscord in dem spiralförmigen Teil (21) mit Bezug auf die Reifenumfangsrichtung nicht mehr als 5 Grad beträgt.

4. Motoradreifen (1) nach Anspruch 1, 2 oder 3, wobei in dem Meridianquerschnitt des Reifens, wenn der Reifen auf der Standardfelge montiert und auf den Standarddruck aufgepumpt und mit keiner Reifenlast belastet ist,
das Profil der Lauffläche (2a) des Laufflächenabschnitts (2) in dem Kronenbereich (2C) einen Radius oder Radien (R1) von weniger als 60 % der Breite (TW) des Laufflächenabschnitts (2) in der axialen Richtung des Reifens hat.

5. Motoradreifen (1) nach Anspruch 1, 2, 3 oder 4, wobei der gummibeschichtete Cordstreifen (9), der das spiralförmige Teil (21) ausbildet, nur einen darin eingebetteten Verstärkungscord (10) hat.

## Revendications

1. Pneumatique de moto (1) comprenant :
une carcasse toroïdale (6), et
une couche de renforcement de bande de roulement (7) disposée radialement à l'extérieur de la carcasse (6) dans une partie de bande de roulement (2),
la couche de renforcement de bande de roulement (7) comprenant :
une partie de renforcement de sommet (7C) formé en enroulant une bande de corde recouverte de caoutchouc (9) d'au moins une corde de renforcement caoutchoutée (10) recouverte avec un caoutchouc de gommage (11), autour d'une région de sommet (2C) comprenant l'équateur (C) du pneumatique, et
une paire de parties de renforcement d'épaulement (7S), chacune formée en enroulant une bande de corde recouverte de caoutchouc (9) autour d'une région d'épaulement (2S) de chaque côté de la région de sommet (2C),
dans lequel :
la partie de renforcement de sommet (7C) comprend une partie en spirale (21) dans laquelle la bande de corde recouverte de caoutchouc (9) est enroulée en spirale et de manière circonférentielle du pneumatique sur plus d'un tour,
la largeur (Wa) dans la direction axiale du pneumatique dans la partie en spirale (21) est dans la plage de 30% à 55% de la largeur (TW) dans la direction axiale du pneumatique de la partie de bande de roulement (2),
chacune des parties de renforcement d'épaulement (7S) comprend :
une pluralité de premiers segments d'inclinaison (15) dans lesquels la bande de corde recouverte de caoutchouc (9) est inclinée d'un côté par rapport à la direction circonférentielle du pneumatique, et
une pluralité de seconds segments d'inclinaison (16) dans lesquels la bande de corde recouverte de caoutchouc (9) est inclinée vers l'autre côté opposé à la pluralité de premiers segments d'inclinaison (15) par rapport à la direction circonférentielle du pneumatique, de sorte que les premiers segments d'inclinaison (15) coupent les seconds segments d'inclinaison (16),
les bords latéraux (15s) des premiers segments d'inclinaison (15) sont agencés afin de ne pas être en contact entre eux, et les bords latéraux (16s) des seconds segments d'inclinaison (16) sont agencés afin de ne pas être en contact entre eux, moyennant quoi une partie d'engrènement (20) ayant une structure d'engrènement avec une pluralité d'espaces (7) est formée,
les deux bords (21e) dans la direction axiale du pneumatique de la partie en spirale (21) sont positionnés, dans la direction axiale du pneumatique, à l'extérieur d'une pièce de contact avec le sol (2A) du pneumatique (1) lorsque le pneumatique (1) monté sur une jante standard et gonflé à une pression standard est en contact avec une surface plate et chargé avec une charge normale à un angle de cambrure nul, et
les parties de renforcement d'épaulement (7S) comprennent en outre une pluralité de segments circonférentiels (14), dans lesquels la bande de corde recouverte de caoutchouc (9) s'étend dans la direction circonférentielle du pneumatique,
**caractérisé en ce que** :
les segments circonférentiels (14) sont disposés au niveau des deux bords (20e) dans la direction axiale du pneumatique de la partie d'engrènement (20), et
les segments circonférentiels (14) comprennent une pluralité de segments circonférentiels externes (18) du côté du bord de bande de roulement (TE) et une pluralité de segments circonférentiels internes (19) du côté de l'équateur (C) du pneumatique.

2. Pneumatique de moto (1) selon la revendication 1, dans lequel :
les deux bords (21e) dans la direction axiale du pneumatique de la partie en spirale (21) sont positionnés, dans la direction axiale du pneumatique, à l'extérieur d'une pièce de contact avec le sol (2B) superposée qui est obtenue en superposant :
une pièce de contact avec le sol du pneumatique (1) lorsque le pneumatique (1) monté sur la jante standard et gonflé avec la pression standard et chargé avec la charge normale, est incliné dans une direction le long de la direction axiale du pneumatique à l'angle de cambrure de 5 degrés, sur
une pièce de contact avec le sol du pneumatique (1) lorsque le pneumatique (1) monté sur la jante standard et gonflé à la pression standard et chargé avec la charge normale est incliné dans une autre direction le long de la direction axiale du pneumatique à l'angle de cambrure de 5 degrés.

3. Pneumatique de moto (1) selon la revendication 1 ou 2, dans lequel l'angle (θ1) par rapport à la direction circonférentielle du pneumatique de chaque corde de renforcement dans la partie en spirale (21) n'est pas supérieur à 5 degrés.

4. Pneumatique de moto (1) selon la revendication 1, 2 ou 3, dans lequel, dans la section transversale méridienne du pneumatique lorsque le pneumatique est monté sur la jante standard et gonflé à la pression standard et chargé sans charge de pneumatique,
le profil de la surface de bande de roulement (2a) de la partie de bande de roulement (2) a, dans la région de sommet (2C), un rayon ou des rayons (R1) inférieur (s) à 60 % de la largeur (TW) dans la direction axiale du pneumatique de la partie de bande de roulement (2).

5. Pneumatique de moto (1) selon la revendication 1, 2, 3 ou 4, dans lequel la bande de corde recouverte de caoutchouc (9) formant la partie en spirale (21) a une seule corde de renforcement (10) encastrée dans cette dernière.
